# EUROPÄISCHE PATENTSCHRIFT

(11) **EP 1 859 131 B1**
(45) Veröffentlichungstag und Bekanntmachung des Hinweises auf die Patenterteilung: **08.10.2008**
(21) Anmeldenummer: 06704442.0
(22) Anmeldetag: 24.01.2006
(51) Int. Cl.: F01N 3/20, F01N 3/025, F01N 3/035

(54) **VERFAHREN ZUR ABGASNACHBEHANDLUNG BEI DIESELMOTOREN ODER DERGLEICHEN, UND VORRICHTUNG ZUR DURCHFÜHRUNG DIESES VERFAHRENS**
METHOD FOR EXHAUST GAS TREATMENT FOR DIESEL ENGINES OR SIMILAR AND DEVICE FOR CARRYING OUT SAID METHOD
PROCEDE DE TRAITEMENT SECONDAIRE DES GAZ D'ECHAPPEMENT DE MOTEURS DIESEL OU ANALOGUES ET DISPOSITIF PERMETTANT LA MISE EN OEUVRE DUDIT PROCEDE

(30) Priorität: 03.03.2005 DE 102005009686
(43) Veröffentlichungstag der Anmeldung: 28.11.2007
(73) Patentinhaber: Volkswagen Aktiengesellschaft, 38436 Wolfsburg (DE)
(72) Erfinder: DÜSTERDIEK, Thorsten, 30659 Hannover (DE); FREITAG, Achim, 38302 Wolfenbüttel (DE); JUTKA, Carsten, 38550 Isenbüttel (DE); KÖSTERS, Martina, 30161 Hannover (DE)
(74) Vertreter: Pohlmann, Bernd Michael
(86) Internationale Anmeldenummer: PCT/EP2006/000591
(87) Internationale Veröffentlichungsnummer: WO 2006/092190

(56) Entgegenhaltungen:
- EP-A- 1 469 173

## Beschreibung

Die vorliegende Erfindung betrifft ein Verfahren zur Abgasnachbehandlung bei Dieselmotoren oder dergleichen, bei welchem das Abgas durch einen jeweils im Abgasstrang angeordneten regenerierbaren Partikelfilter sowie einen NOx-Katalysator geleitet wird, sowie eine Vorrichtung zum Durchführen dieses Verfahrens. Unter dem Begriff "Dieselmotoren oder dergleichen" werden Motoren verstanden, deren Abgase nicht vernachlässigbare Mengen an Rußpartikeln oder ähnlichen Verbrennungsrückständen enthalten.

Es ist bereits bekannt, den Gehalt an Rußpartikeln und Stickoxiden im Abgas durch getrennte Aggregate so weit abzusenken, dass das Abgas den gesetzlich vorgeschriebenen Abgasgrenzwerten entspricht.

Eine seit Jahren erprobe Technologie zur NOx-Minderung ist die Harnstoff-SCR-Technologie (SCR = selective catalytic reduction). Dabei wird Harnstoff bzw. eine wässrige Harnstofflösung über ein Dosiersystem vor dem NOx-Katalysator in den Abgasstrang eingebracht, wobei dann im NOx-Katalysator in zwei chemischen Schritten Ammoniak entsteht, welches wiederum mit den im NOx-Katalysator gesammelten Stickoxiden zu Stickstoff reagiert. Der Vorteil einer Verwendung von Harnstoff liegt darin, dass der Umgang bei Transport und Lagerung völlig problemlos ist, da Harnstoff farblos, geruchsfrei, ungiftig und biologisch unbedenklich ist.

Zum Ausfiltern von Rußpartikeln aus dem Abgas haben sich Partikelfilter vom CSF-Typ bewährt (CSF = catalysed soot filter). Es handelt sich dabei um Partikelfilter, die eine katalytische Beschichtung aufweisen, um den Rußabbrand zu verbessern bzw. zu ermöglichen. Partikelfilter vom CSF-Typ sind passive, d.h. kontinuierlich arbeitende Systeme mit einer hohen Lebensdauer. Ein weiterer Vorteil ist ihr geringer Bauraumbedarf.

NOx-Katalysatoren vom SCR-Typ einerseits und Partikelfilter vom CSF-Typ andererseits sind deshalb besonders für die Verwendung in Kraftfahrzeugen geeignet. Es sind bereits in der Literatur Anlagen diskutiert worden, bei denen ein Partikelfilter vom CSF-Typ und ein NOx-Katalysator vom SCR-Typ bezüglich der Strömungsrichtung des Abgases hintereinander im Abgasstrang angeordnet sind. Eine motornahe Anordnung des Partikelfilters gewährleistet wegen der verhältnismäßig hohen Abgastemperatur einen zuverlässigen Rußabbrand. Ein problem ergibt sich jedoch aus der motorfernen Anordnung des SCR-Katalysators. Die Harnstoff-SCR-Technologie kann erst ab einer Abgastemperatur von mehr als 200°C hinreichend stabil eingesetzt werden. Unterhalb dieser Temperatur kann kein frische Reduktionsmittel in den Abgasstrang eingespritzt werden, da eine-vollständige Auflösung der Harnstofflösung im Abgasstrang bei Temperaturen unter 200°C nicht-gewährleistet ist. Es kann dann nämlich zu einer Polymerisation des Harnstoffes kommen, die zu irreversiblen Ablagerungen im Abgasstrang führt und diesen im Laufe der Zeit verstopft.

Das bedeutet, dass eine nennenswerte Entstickung des Abgases erst einsetzen kann, nachdem der SCR-Katalysator nach einer bestimmten Betriebszeit auf eine ausreichende Temperatur aufgeheizt worden ist. Bei einem MVEG-Testzyklus (MVEG = motor vehicle emissions group), bei welchem die Abgastemperatur an dem nachgeordneten SCR-Katalysator sehr lange unterhalb von 200°C bleibt, ist deshalb nur eine verhältnismäßig niedrige Entstickungsrate zu erwarten.

Aus der EP 1.469 173 A1 ist ein System zum Temperaturmanagement eines Dieselmotors bekannt, bei dem stromaufwärts eines SCR-Katalysotors ein steuerbarer Wärmetauscher sowie eine zusätzliche Wärmequelle vorgesehen sind. Stromaufwärts des Wärmetauschers ist ein Dieseloxidationskatalysator angeordnet, während stromabwärts des SCR-Katalysators ein Dieselpartikelfilter angeordnet ist.

Es ist die Aufgabe der vorliegenden Erfindung, ein Verfahren der im Oberbegriff des Anspruches 1 genannten Art sowie eine Vorrichtung zur Durchführung dieses Verfahrens zu schaffen, bei denen der Wirkungsgrad des SCR-Katalysators in allen Betriebsbereichen verbessert wird, wobei gleichzeitig ein ordnungsgemäßer Betrieb des CSF-Partikelfilters gewährleistet ist.

Diese Aufgabe ist erfindungsgemäß durch ein Verfahren mit den Merkmalen des Anspruches 1 sowie eine Vorrichtung mit den Merkmalen des Anspruches 3 gelöst. Bevorzugte Ausgestaltungen der Erfindung sind Gegenstand der Unteransprüche.

Das erfindungsgemäße Verfahren sieht vor, dass das Abgas zuerst durch einen motornah angeordneten NOx-Katalysator vom Harnstoff-SCR-Typ und anschließend durch einen Partikelfilter vom CSF-Typ geleitet wird, wobei dem Partikelfilter die für seine Regeneration erforderliche Energie von außen zugeführt wird.

Durch die motornahe Anordnung des SCR-Katalysators wird infolge der höheren Abgastemperatur das Arbeitsfenster des Katalysators besser genutzt; die Konvertierung der Stickoxide beginnt früher, was zu einer Steigerung der Entstickungsrate über die gesamte Betriebszeit (beispielsweise einen MVEG-Testzyklus) führt. Der für die Regeneration erforderliche Harnstoff wird vor dem SCR-Katalysator in den Abgasstrang gespritzt.

Um trotz der motorfernen Anordnung des CSF-Partikelfilters dessen ordnungsgemäßen Betrieb sicherzustellen, wird diesem die für seine Regeneration erforderliche Energie von außen zugeführt. Diese Energie kann in unterschiedlicher Weise zugeführt werden, nämlich etwa in Form von Wärmeenergie mittels Mikrowellen- oder Elektro-Heizeinrichtungen, oder in der Form von Brennstoffen, die mit dem im Abgas enthaltenen Sauerstoffüberschuss reagieren. In einer bevorzugten Ausgestaltung der Erfindung ist vorgesehen, dass als Regenerationsmittel für den CSF-Partikelfilter der für den Betrieb des Motors vorgesehene Kraftstoff verwendet wird, da dieser im Betrieb immer zur Verfügung steht und beispielsweise keine gesonderten Tanks erfordert. Die Regeneration des Partikelfilters kann dabei jedoch nicht über eine vom Motormanagement gesteuerte Gemischanreicherung erfolgen, da die daraus resultierenden Abgastemperaturen von über 650°C, die sich etwas vermindert auch im SCR-Katalysator einstellen, deutlich an dessen Toleranzgrenzen liegen würden. Darüber hinaus würde eine durch Nacheinspritzen verursachte erhöhte Kohlenwasserstoffkonzentration beim Überleiten über bestimmte Typen von SCR-Katalysator zu einer Vergiftung des Katalysators und damit zu Einbußen im Wirkungsgrad führen.

Gemäß der Erfindung ist deshalb vorgesehen, dass der Kraftstoff vor dem Partikelfilter in den Abgasstrang eingespritzt wird (HCl-Verfahren).

Mit dem erfindungsgemäßen Verfahren wird deshalb in vorteilhafter Weise eine gute Ausnutzung des Arbeitsfensters des SCR-Katalysators einerseits und eine motorschonende Partikelfilter-Regeneration andererseits erzielt.

Eine Vorrichtung gemäß dem Oberbegriff des Anspruches 3 ist erfindungsgemäß gekennzeichnet durch einen motomah angeordneten NOx-Katalysator vom Harnstoff-SCR-Typ und einen stromabwärts davon angeordneten Partikelfilter vom CSF-Typ, und durch eine dem Partikelfilter zugeordnete Einrichtung zum Zuführen der für seine Regeneration erforderlich Energie. Wie bereits weiter vorne ausgeführt wurde, ist gemäß einer bevorzugten Ausgestaltung der Erfindung eine Einrichtung vorgesehen, um vor dem Partikelfilter Kraftstoff in den Abgasstrang einzuspritzen. Als Kraftstoff wird vorzugsweise der für den Betrieb des Dieselmotors vorgesehene Kraftstoff verwendet, so dass die Einrichtung zum Einspritzen von Kraftstoff direkt an den Kraftstofftank des Dieselmotors angeschlossen sein kann und ein gesonderter Kraftstofftank nicht erforderlich ist.

Wenn die beschriebene Vorrichtung zur Abgasnachbehandlung bei einem Kraftfahrzeug verwendet wird, ist gemäß einer weiteren Ausgestaltung der Erfindung vorgesehen, dass der Partikelfilter im Unterbodenbereich des Kraftfahrzeuges angeordnet ist, wo die von diesem abgegebene Wärme direkt an die Umgebung abgeführt .werden kann.

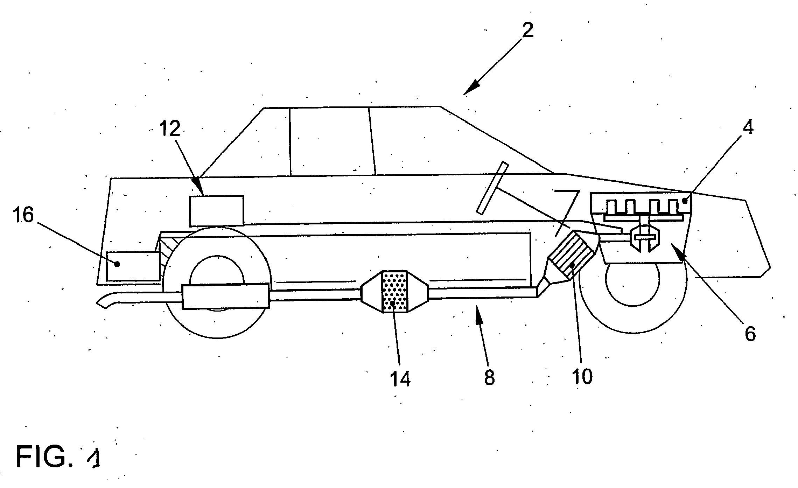

Ein Ausführungsbeispiel der Erfindung ist in der Zeichnung dargestellt und im folgenden näher beschrieben.

Die einzige Figur zeigt schematisch ein Kraftfahrzeug mit einem Verbrennungsmotor, in dessen Abgasstrang hintereinander ein SCR-Katalysator und ein CSF-Partikelfilter angeordnet sind.

Das in der Figur schematisch dargestellte Kraftfahrzeug 2 wird durch einen Dieselmotor 4 angetrieben. Wie ebenfalls schematisch dargestellt ist, ist der Dieselmotor 4 mit einem Abgasturbolader'6 ausgestattet, welcher in bekannter Weise die Abgase des Dieselmotors 4 nutzt, um diesen aufzuladen.

Die Abgase werden durch einen als Ganzes mit 8 bezeichneten Abgasstrang in die Umgebung abgeführt. In diesem Abgasstrang 8 ist unmittelbar hinter dem Dieselmotor 4 ein SCR-Katalysator 10 angeordnet, in welchem die Abgase in einem ersten Verfahrensschritt entstickt werden. Der SCR-Katalysator 10 arbeitet mit Harnstoff bzw. einer wässrigen Harnstofflösung als Reduktionsmittel, welche, einem beispielsweise im Heck des Fahrzeuges angeordneten Hamstofftank 12 entnommen und vor dem SCR-Katalysator 10 in den Abgasstrang 8 eingespritzt wird. Der Harnstoff SCR-Katalysator 10 arbeitet bei einer Abgastemperatur deutlich innerhalb der Wärmeverträglichkeitsgrenzen des SCR-Katalysators in einem wirksamen Bereich des SCR-Arbeitsfensters.

Stromabwärts des SCR-Katalysators ist im Abgasstrang ein regenerierbarer Partikelfilter 14 angeordnet, welcher dem Abgas Rußpartikel entzieht. Der Partikelfilter 14 ist ein Partikelfilter vom CSF-Typ, welcher mit einem katalytisch aktiven Material beschichtet ist. Der Partikelfilter 14 wird mittels Kraftstoff regeneriert, welcher dem Kraftstofftank 16 des Kraftfahrzeug 2 entnommen und vor dem Partikelfilter 14 in den Abgasstrang 8 eingespritzt wird. Durch eine geregelte Dosierung der Kraftstoffeinspritzung kann der Partikelfilter bei einer für den Rußabbrand optimalen Temperatur betrieben werden

### Bezugszeichenliste

- 2: Kraftfahrzeug
- 4: Dieselmotors
- 6: Abgasturbolader
- 8: Abgasstrang
- 10: SCR-Katalysator
- 12: Harnstofftank
- 14: Partikelfilter
- 16: Kraftstofftank

## Patentansprüche

1. Verfahren zur Abgasnachbehandlung bei Dieselmotoren oder dergleichen, bei welchem das Abgas durch einen jeweils im Abgasstrang angeordneten regenerierbaren Partikelfilter sowie einen NOx-Katalysator geleitet wird, **dadurch gekennzeichnet, dass** das Abgas zuerst durch einen unmittelbar nach dem Dieselmotor angeordneten NOx-Katalysator (10) vom Harnstoff-SCR-Typ (SCR = selective catalytic reduction) und anschließend durch einen Partikelfilter (14) vom CSF-Typ (CSF = catalysed soot filter) geleitet wird, wobei dem Partikelfilter (14) die für seine Regeneration erforderliche Energie von außen zugeführt wird.

2. Verfahren nach Anspruch 1, **dadurch gekennzeichnet, dass** vor dem Partikelfilter (14) Kraftstoff in den Abgasstrang (8) eingespritzt wird.

3. Vorrichtung zur Abgasnachbehandlung bei Dieselmotoren oder dergleichen, umfassend einen jeweils im Abgasstrang angeordneten regenerierbaren Partikelfilter sowie einen NOx-Katalysator, **gekennzeichnet durch** einen unmittelbar nach dem Dieselmotor angeordneten NOx-Katalysator (10) vom Harnstoff SCR-Typ und einen stromabwärts davon angeordneten Partikelfilter (14) vom CSF-Typ, und **durch** eine dem Partikelfilter (14) zugeordnete Einrichtung zum Zuführen der für seine Regeneration erforderlichen Energie.

4. Vorrichtung nach Anspruch 3, **gekennzeichnet durch** eine Einrichtung zum Einspritzen von Kraftstoff vor dem Partikelfilter (14) in den Abgasstrang (8).

5. Vorrichtung nach Anspruch 4, **dadurch gekennzeichnet, dass** die Einrichtung zum Einspritzen von Kraftstoff an den Kraftstofftank (16) des Dieselmotors (4) angeschlossen ist.

6. Vorrichtung nach einem der Ansprüche 3 bis 5 zur Verwendung in einem Kraftfahrzeug, **dadurch gekennzeichnet, dass** der Partikelfilter (14) im Unterbodenbereich des Kraftfahrzeuges (2) angeordnet ist.

## Claims

1. Method for exhaust-gas aftertreatment in diesel engines or the like, in which method the exhaust gas is conducted through a regenerable particle filter, and a NOₓ catalytic converter, which are arranged in each case in the exhaust strand, **characterized in that** the exhaust gas is conducted firstly through a NOₓ catalytic converter (10), of the urea-SCR type (SCR = selective catalytic reduction), which is arranged directly downstream of the diesel engine, and subsequently through a particle filter (14) of the CSF type (CSF = catalysed soot filter), with the energy required for the regeneration of the particle filter (14) being supplied to the latter from an external source.

2. Method according to Claim 1, **characterized in that** fuel is injected into the exhaust strand (8) upstream of the particle filter (14).

3. Device for exhaust-gas aftertreatment in diesel engines or the like, comprising a regenerable particle filter, and a NOₓ catalytic converter, which are arranged in each case in the exhaust strand, **characterized by** a NOₓ catalytic converter (10), of the urea-SCR type, which is arranged directly downstream of the diesel engine, and, arranged downstream of said NOₓ catalytic converter (10), a particle filter (14) of the CSF type, and by a device, which is assigned to the particle filter (14), for supplying the energy required for the regeneration of the latter.

4. Device according to Claim 3, **characterized by** a device for injecting fuel into the exhaust strand (8) upstream of the particle filter (14).

5. Device according to Claim 4, **characterized in that** the device for injecting fuel is connected to the fuel tank (16) of the diesel engine (4).

6. Device according to one of Claims 3 to 5 for use in a motor vehicle, **characterized in that** the particle filter (14) is arranged in the underbody region of the motor vehicle (2).

## Revendications

1. Procédé de traitement secondaire des gaz d'échappement de moteurs diesel ou analogues, dans lequel le gaz d'échappement est conduit à travers un filtre à particules pouvant se régénérer disposé respectivement dans une branche de gaz d'échappement ainsi qu'un catalyseur NOx, **caractérisé en ce que** le gaz d'échappement est d'abord conduit à travers un catalyseur NOx (10) de type à SCR par urée (SCR = selective catalytic réduction, réduction catalytique sélective) disposé directement après le moteur diesel puis à travers un filtre à particules (14) de type CSF (CSF = catalysed soot filter, filtre à suie catalysé), l'énergie nécessaire à la régénération du filtre à particules (14) étant amenée de l'extérieur.

2. Procédé selon la revendication 1, **caractérisé en ce que** du carburant est injecté dans la branche de gaz d'échappement (8) avant le filtre à particules (14).

3. Dispositif de traitement secondaire des gaz d'échappement de moteurs diesel ou analogues, comprenant un filtre à particules pouvant se régénérer disposé respectivement dans la branche de gaz d'échappement ainsi qu'un catalyseur NOx, **caractérisé par** un catalyseur NOx (10) disposé directement après le moteur diesel de type à SCR par urée et par un filtre à particules (14) de type CSF disposé en amont, et par un dispositif associé au filtre à particules (14) permettant d'amener l'énergie nécessaire à sa régénération.

4. Dispositif selon la revendication 3, **caractérisé par** un dispositif d'injection de carburant avant le filtre à particules (14) dans la branche de gaz d'échappement (8).

5. Dispositif selon la revendication 4, **caractérisé en ce que** le dispositif d'injection de carburant est raccordé au réservoir de carburant (16) du moteur diesel (4).

6. Dispositif selon l'une quelconque des revendications 3 à 5, à utiliser dans un véhicule automobile, **caractérisé en ce que** le filtre à particules (14) est disposé dans le dessous du véhicule automobile (2).
